# EUROPEAN PATENT APPLICATION

(11) **EP 2 043 073 A1**
(43) Date of publication of application: **01.04.2009**
(21) Application number: 07768235.9
(22) Date of filing: 05.07.2007
(51) Int. Cl.: G09C 1/00, G06F 12/00, G06F 21/24, H04L 9/08

(54) **METHOD FOR ENCRYPTING AND DECRYPTING SHARED ENCRYPTED FILES**

(71) Applicant: HITACHI SOFTWARE ENGINEERING CO., LTD., Yokohama (JP)
(72) Inventor: OGAWA, Tomoyuki, Tokyo 1400002 (JP); NISHIDE, Takashi, Tokyo 1400002 (JP)
(74) Representative: Liesegang, Eva
(86) International application number: PCT/JP2007/063486
(87) International publication number: WO 2009/004732

(57) **Abstract**

[Object] To achieve encryption and decryption without troublesome process such as updating of an encryption key or re-encryption of an encrypted file when a shared encrypted file is generated, renamed or deleted.

[Means for Resolution] When a request to read or store a shared encrypted file is given from any application, a filter driver 12 in a client computer 1 catches the request temporarily, receives client authentication from a key management server 2 and acquires a key list having pairs of UNC path names and encryption keys corresponding to shared encrypted folders allowed to be accessed from the key management server 2. The filter driver 12 accesses a shared encrypted folder as a destination of the read or store request in the shared encrypted folders and performs decryption or encryption of the shared encrypted file by using an encryption key of the key list corresponding to a UNC path name concerned with the UNC path name to be accessed when the UNC path name concerned is present in the key list.

## Description

### Technical Field

The present invention relates to an encryption and decryption method for a shared encrypted file. It particularly relates to an encryption and decryption method for a shared encrypted file which is shared among a plurality of clients.

### Background Art

For example, a technique described in Patent Document 1 or the like is known as the background art concerned with key management of a shared encrypted file which is shared among a plurality of clients. This background art is configured as follows. An authentication server and a key management server for managing an encryption key of each file are provided. After a client receives client authentication from the authentication server, the name of the client is transmitted to the key management server. The client acquires a list of encryption keys corresponding to accessible file names from the key management server. When the client is to access a shared encrypted file, encryption and decryption of the file is performed on the client side by use of one of the encryption keys acquired from the key management server.
Patent Document 1: JP-A-2005-286042

### Disclosure of the Invention

### Problems that the Invention is to Solve

The aforementioned background art has an advantage that high safety can be achieved because one key can be set in accordance with each file. It is however necessary to communicate with the key management server to update the encryption key registered in the key management server whenever a file is to be generated newly, renamed or deleted. For this reason, the aforementioned background art has a problem that updating of the encryption key for generation of a new file, renaming of a file or the like is very troublesome.

It is possible that one encryption key is set for one file server to make the management of the encryption key easy.
In this case, there arises a problem that safety is lowered though it is easy to manage the encryption key.

In order to solve the aforementioned problems of the background art, an obj ect of the present invention is to provide an encryption and decryption method for a shared encrypted file, in which encryption and decryption of a shared encrypted file shared among a plurality of clients can be achieved without troublesome processing such as updating of an encryption key or re-encryption of an encrypted file when the shared encrypted file is to be generated, renamed or deleted.

### Means for Solving the Problems

According to the present invention, the foregoing object can be achieved by an encryption and decryption method for a shared encrypted file in a system configured so that at least one client computer, at least one key management server and at least one file server are connected to one another by a network, wherein: any application such as a document generating program and a file access control unit are provided in the client computer, and the key management server manages key management information for shared encrypted folders stored in the file server; and the file access control unit in the client computer includes a first step of temporarily catching a read request or a store request when the request to read or store a shared encrypted file is given from any application, receiving client authentication of the client computer from the key management server and acquiring a key list having pairs of UNC path names and encryption keys corresponding to shared encrypted folders of the file server allowed to be accessed by the client computer from the key management server, and a second step of accessing a shared encrypted folder as a destination of the read or store request in the shared encrypted folders of the file server and performing decryption or encryption of the shared encrypted file by using an encryption key of the key list corresponding to a UNC path name concerned with the UNC path name to be accessed when the UNC path name concerned is present in the key list.

### Effect of the Invention

According to the present invention, a piece of key data for encryption or decryption can be selected automatically from a key list if a shared encrypted folder is designated when the shared encrypted file is to be deleted, renamed or generated newly. Accordingly, troublesome work such as registration, deletion or change of an encryption key can be made unnecessary.

### Best Mode for Carrying Out the Invention

An embodiment of an encryption and decryption method for a shared encrypted file according to the invention will be described below in detail with reference to the drawings.

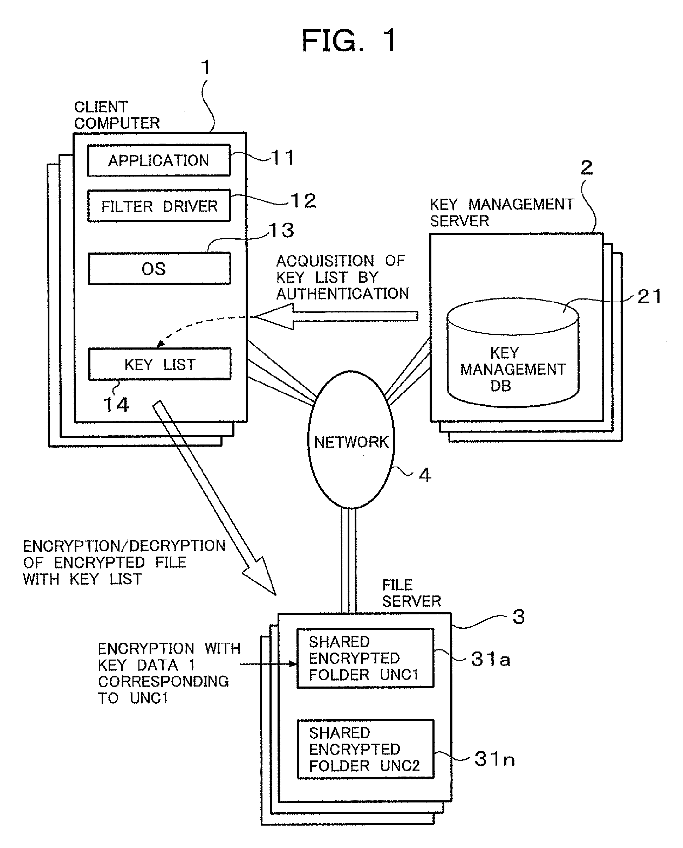

Fig. 1 is a block diagram showing the configuration of a system for carrying out an encryption and decryption method for a shared encrypted file according to an embodiment of the invention. The system shown in Fig. 1 is configured so that one or a plurality of client computers 1, one or a plurality of key management servers 2 and one or a plurality of file servers 3 are connected to one another by a network 4. Though not shown in Fig. 1, an administrator terminal which will be described later is connected to the network 4 so that the administrator terminal is used by an administrator for generating a key list, registering the key list in the key management server 2 and registering a shared encrypted folder as a root in the file server 3. This administrator terminal may be provided independently or one of the client computers 1 may serve also as the administrator terminal. When one of the client computers 1 serves also as the administrator terminal, a user using the client computer is the administrator. Although only one client computer 1, only one key management server 2 and only one file server 3 are shown in Fig. 1, a plurality of client computers 1, a plurality of key management servers 2 and a plurality of file servers 3 may be provided.

The client computer 1 is an information processing apparatus as represented by a PC, which includes a CPU, a main memory, a storage device such as an HDD, output devices such as a display device and a printer, input devices such as a keyboard and a mouse, and a communication device. Any application 11 such as a document generating program, a filter driver (file access control program) 12 as a chief constituent member of the invention and an operating program (OS) 13 are installed in the client computer 1. The application 11 and the filter driver 12 are stored as programs in the storage device. The application 11 and the filter driver 12 form their respective functions when they are loaded into the main memory and executed by the CPU under the OS 13 also loaded into the main memory.

The filter driver 12 has a function of temporarily catching an access request (such as a read request or a write request) for the shared encrypted folder from the application 11, acquiring a key list 14 from the key management server 2 to decrypt an encrypted file in the shared encrypted folder or encrypt a shared file to be written in the shared encrypted folder, applying a decryption or encryption process to the encrypted file by using a piece of key data in the key list 14, transferring decrypted plaintext data to the application 11 or transferring the encrypted shared encrypted file to the file server 3, and storing it.

The key management server 2 is an information processing apparatus which includes a CPU, a main memory, and a storage device such as an HDD. A key management DB 21 in which the key list for the shared encrypted folder allowed to be accessed by the client computer 1 is stored is held in the storage device and managed by the key management server 2.

The file server 3 is an information processing apparatus which includes a CPU, a main memory, and a storage device such as an HDD. Shared encrypted folders 31a and 31n which can be accessed by the client computer are stored in the storage device and managed by the file server 3.

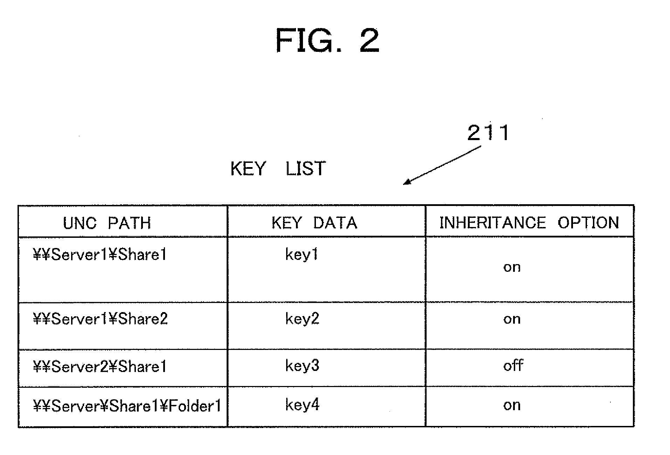

Fig. 2 is a view showing the configuration of the key management DB 21 held in the key management server 2. As shown in Fig. 2, a key list 211 having record sets each containing a UNC path name, a piece of key data, and an inheritance option in accordance with each shared encrypted folder in the file server 3 is registered in the key management DB 21. The UNC path name specifies a folder. The key data is used for encryption or decryption. The inheritance option is a flag which indicates whether or not files in and under sub-folders are to be encrypted by use of the same key.

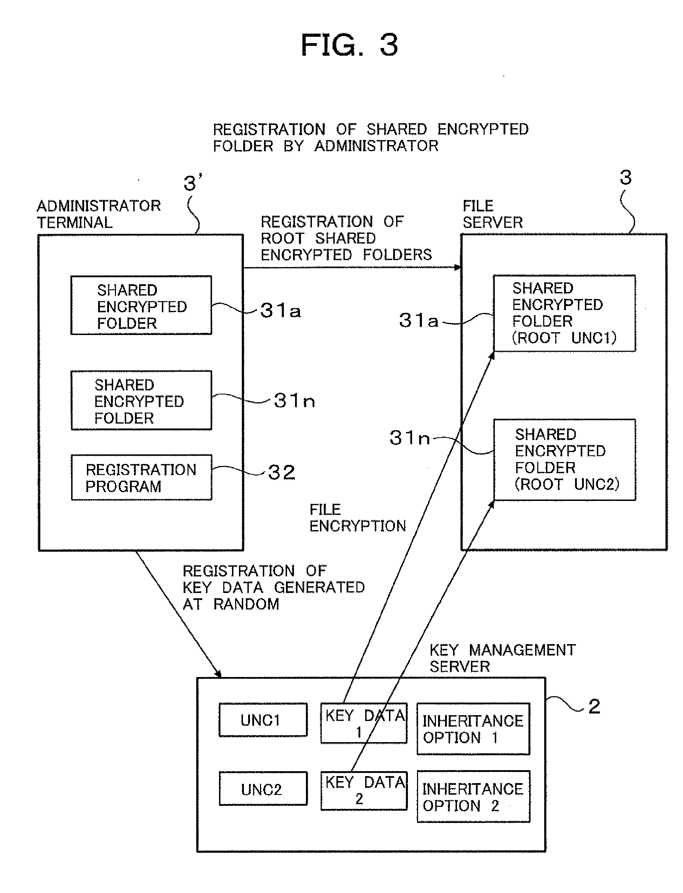

Fig. 3 is a diagram for explaining the case where shared encrypted folders are registered in the file server by the administrator. As described above, the administrator terminal 3' is connected to the network 4. When the administrator terminal 3' is provided independently, the administrator terminal 3' has the same configuration as that of the client computer and a registration program 32 is provided in the inside of the administrator terminal 3' so that the registration program 32 can operate.

The administrator of the file server 3 registers root shared encrypted folders 31a and 31n having UNC paths in the file server 3 by using the registration program 32 of the administrator terminal 3'. A plurality of root shared encrypted folders 31a and 31n can be registered in one file server 3, so that different UNC path names can be given to the root shared encrypted folders 31a and 31n respectively.
Incidentally, the root shared encrypted folders 31a and 31n initially registered in the file server 3 by the administrator are empty folders which have no file.

The administrator of the file server 3 registers the key list in the key management server 2. The key list has pairs each of which has a UNC path name set in accordance with each of the shared encrypted folders 31a and 31n, and a piece of key data generated at random in accordance with the UNC path name by use of the registration program 32. The key information for the shared encrypted folders 31a and 31n is registered not in such a manner that the administrator of the file server 3 encrypts files one by one to register each key in the key management server 2 but in such a manner that the administrator of the file server 3 designates shared encrypted folders as roots (referred to as root shared encrypted folders) (typically, with a UNC (Universal Naming Convention) path such as ¥¥Server¥Share1).

All files in a root shared encrypted folder (including all files in and under sub-folders when the sub-folders are present in the case where the inheritance option is on) are encrypted with the same key. At the time of this registration, a pair of a UNC path of the root shared encrypted folder and a piece of key data generated at random for the root shared encrypted folder are registered in the key management DB 21.

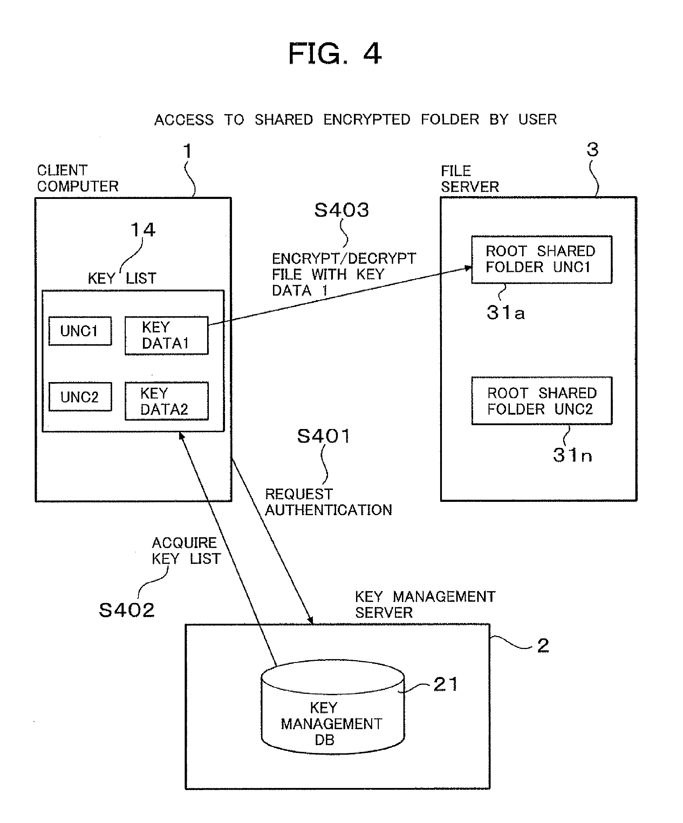

Fig. 4 is a diagram for explaining a procedure of processing in the case where the user accesses a file in a shared encrypted folder from the client computer 1. Though not shown in Fig. 4, any application 11, a filter driver 12 and an OS 13 are installed in the client computer 1 as described above with reference to Fig. 1.

When the application 11 of the client computer 1 is to access (read or write) a file in a shared encrypted folder on the basis of a user's instruction, the filter driver 12 first catches the access request temporarily, transmits a client authentication request to the key management server 2 (step S401) and acquires a key list 14 from the key management server 2, the key list 14 having pairs each having a UNC path name and a piece of key data and allowed to be accessed by the client computer 1 (step S402). Assume that the key list 14 acquired by this processing has a pair of UNC1 as a UNC path name and key data 1 as a piece of key data, and a pair of UNC2 as a UNC path name and key data 2 as a piece of key data.

Then, the filter driver 12 accesses a shared encrypted file in the shared encrypted folder in the file server 3. For this access, the filter driver 12 checks whether or not any UNC path name concerned with the UNC path name intended to be accessed is present in the key list 14. When the checking indicates that a UNC path name forward matching with the UNC path in the key list is present (in the case where the inheritance option is on) or such a UNC path name that the UNC path name except file names coincides completely with the UNC path in the key list is present (in the case where the inheritance option is off), the filter driver 12 makes a decision that files in the folder are encrypted. Then, the filter driver 12 extracts a piece of key data corresponding to the UNC path name from the key list 14 and performs encryption or decryption of the shared encrypted file by using the piece of key data (step S403).

Incidentally, the aforementioned example shown in Fig. 4 shows the case where encryption or decryption is performed on the basis of key data 1 corresponding to the shared encrypted folder 31a having root UNC1 as a UNC path name.

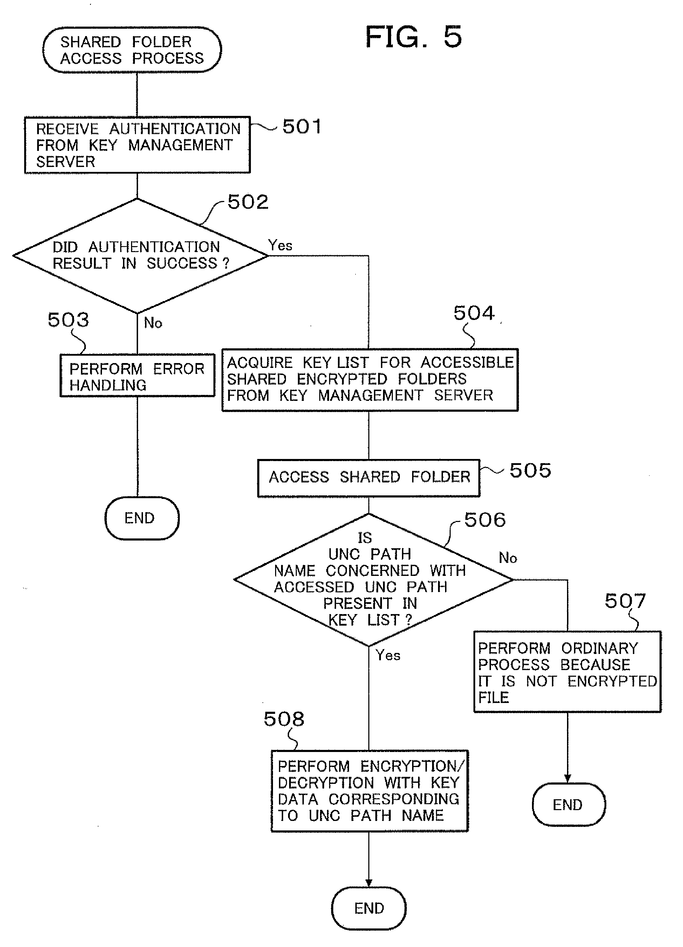

Fig. 5 is a flow chart for explaining a processing operation of the filter driver 12 in the case where the user accesses a file in a shared encrypted folder from the client computer 1. This processing operation will be described next.

(1) When there is an access request (read request or write request) for a shared encrypted file from the application 11, the filter driver 12 catches the access request temporarily, transmits a client authentication request to the key management server 2 and receives a result of the client authentication of the client computer 1 from the key server 2 (step 501).

(2) The filter driver 12 judges whether or not client authentication in the processing of the step 501 results in success. When authentication results in failure, error handling (such as displaying the failure to the user) is performed and the processing is terminated (steps 502 and 503).

(3) When the judgment in the step 502 indicates that client authentication in the processing of the step 501 results in success, the filter driver 12 acquires a key list 14 having pairs of UNC path names and encryption keys respectively corresponding to the shared encrypted folders 31a and 31n allowed to be accessed in the file server 3 by the client computer, from the key server 2 (step 504).

(4) Then, the filter driver 12 accesses the shared encrypted folder (e.g. 31a) of the file server 3 where the shared encrypted file as a destination of the access request is stored, and checks whether or not a UNC path name concerned with the UNC path name intended to be accessed is present in the key list 14 (steps 505 and 506).

(5) When the checking in the step 506 indicates that a UNC path name concerned with the UNC path name intended to be accessed is present in the key list 14, the filter driver 12 performs encryption or decryption of the shared encrypted file as a destination of the access request in the shared encrypted folder by using a piece of key data of the key list 14 corresponding to the UNC path name (step 508).

(6) When the checking in the step 506 indicates that a UNC path name concerned with the UNC path name intended to be accessed is not present in the key list 14, the filter driver 12 applies an ordinary read or write process to the file because the file intended to be accessed is not encrypted (step 507).

When the access request from the application 11 is a read request in the aforementioned process, the filter driver 12 transfers plaintext data as a result of decryption of the shared encrypted file to the application 11. When the access request from the application 11 is a write request, the filter driver 12 encrypts the plaintext shared file received from the application 11 and transfers the shared encrypted file to the file server 3 so as to be stored in the shared encrypted folder.

The aforementioned processing in the embodiment of the invention can be formed from programs, which can be executed by the CPU provided in the invention. Those programs can be provided in the condition that they are stored in a recording medium such as an FD, a CDROM or a DVD. Or the programs can be provided as digital information through the network.

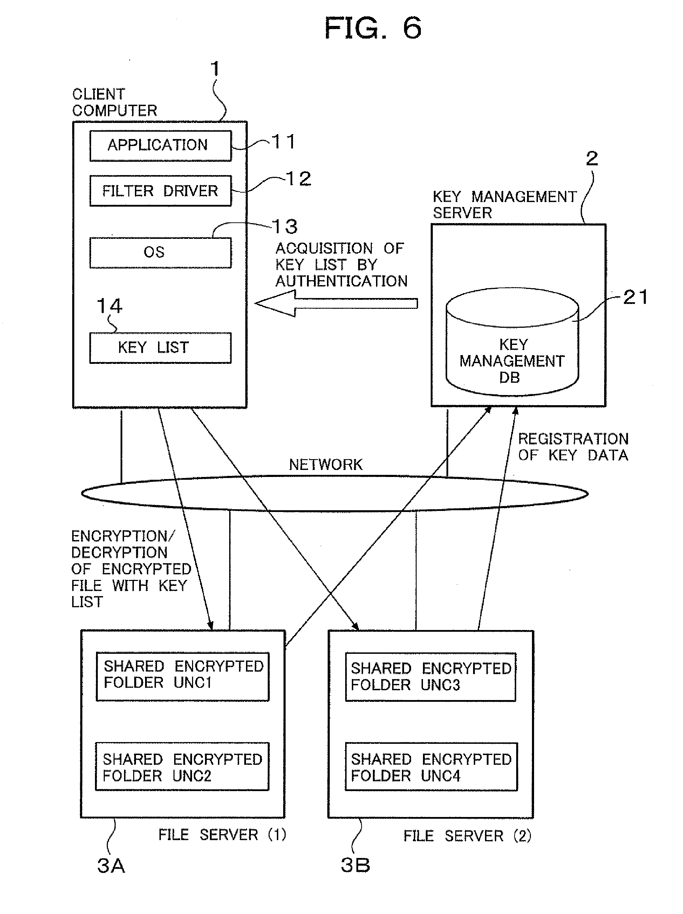

Fig. 6 is a block diagram showing the configuration of a system for carrying out the encryption and decryption method for a shared encrypted file according to an embodiment of the invention in actual operation.

In the example of system configuration shown in Fig. 6, a plurality of file servers (1) 3A and (2) 3B are provided and access to shared encrypted folders of each file server is performed based on a key list 14 distributed from the key management server 2 to the client computer 1.

In this case, the client computer 1 can access shared encrypted folders of both file servers (1) 3A and (2) 3B as long as a key list for the shared encrypted folders of the file servers (1) 3A and (2) 3B has been already acquired by client authentication.

According to the aforementioned embodiment of the invention, different encryption keys are assigned, on a file server, to shared encrypted folders which store shared encrypted files and a key list having pairs of UNC path names and encryption keys corresponding to shared encrypted folders allowed to be accessed by each client computer is registered in a key management server. When a shared encrypted file in the file server is to be read or written, each client computer is authenticated by the key management server and acquires a key list allowed to be accessed by the client computer. When a UNC path name concerned with the UNC path name of the shared encrypted folder as a subject of access is present in the key list, the shared file can be encrypted or decrypted by use of an encryption key of the key list corresponding to the UNC path name.

From the above description, the necessity of generating a new key or deleting a key can be eliminated even in the case where a shared encrypted file is generated newly, renamed or deleted. It becomes very easy to manage encryption keys on the key management server.

According to the aforementioned embodiment of the invention, since a special file etc. for indicating an encrypted folder need not be generated on a shared folder, the necessity of protecting such a special file from being deleted or overwritten by the user can be eliminated to thereby attain improvement in user-friendliness. Moreover, since it is unnecessary to consider generation, protection and deletion of such a special file, installation can be made easy to thereby obtain an effect that practicability is high.

According to the aforementioned embodiment of the invention, different keys can be defined in accordance with UNC path names to thereby make it possible to change keys in accordance with folders. Moreover, an inheritance option can be provided as an option flag in the key list in order to indicate whether a subject of use of a key is only the UNC path name or whether sub-folders inherit the use of a key so that the key is used for lower folders. Accordingly, keys can be set more flexibly, so that safety can be improved more greatly.

### Brief Description of the Drawings

[Fig. 1] A block diagram showing the configuration of a system for carrying out an encryption and decryption method for a shared encrypted file according to an embodiment of the invention.
[Fig. 2] A view showing the configuration of a key management DB held in a key management server.
[Fig. 3] A diagram for explaining the case where shared encrypted folders are registered in a file server by an administrator.
[Fig. 4] A diagram for explaining a procedure of processing in the case where a user accesses a file in a shared encrypted folder from a client computer.
[Fig. 5] A flow chart for explaining a processing operation of a filter driver 12 in the case where a user accesses a file in a shared encrypted folder from a client computer.
[Fig. 6] A block diagram showing the configuration of a system for carrying out an encryption and decryption method for a shared encrypted file according to an embodiment of the invention in actual operation.

### Description of the Reference Numerals

- 1: Client Computer
- 2: Key Management Server
- 3: File Server
- 3': Administrator Terminal
- 4: Network
- 11: Application
- 12: Filter Driver
- 13: Operating System
- 14: Key List
- 21: Key Management Database
- 31a, 31n: Shared Encrypted Folder

## Claims

1. An encryption and decryption method for a shared encrypted file in a system configured so that at least one client computer, at least one key management server and at least one file server are connected to one another by a network, the encryption and decryption method **characterized in that**:
any application such as a document generating program and a file access control unit are provided in the client computer, and the key management server manages key management information for shared encrypted folders stored in the file server; and
the file access control unit in the client computer comprises a first step of temporarily catching a read request or a store request when the request to read or store a shared encrypted file is given from any application, receiving client authentication of the client computer from the key management server and acquiring a key list having pairs of UNC path names and encryption keys corresponding to shared encrypted folders of the file server allowed to be accessed by the client computer from the key management server, and a second step of accessing a shared encrypted folder as a destination of the read or store request in the shared encrypted folders of the file server and performing decryption or encryption of the shared encrypted file by using an encryption key of the key list corresponding to a UNC path name concerned with the UNC path name to be accessed when the UNC path name concerned is present in the key list.

2. An encryption and decryption method for a shared encrypted file according to Claim 1, **characterized in that** an inheritance option which is a flag indicating whether or not files in and under sub-folders are to be encrypted with the same key can be set in the key list.

3. In a system configured so that at least one client computer, at least one key management server and at least one file server are connected to one another by a network, a shared encrypted file encryption and decryption program executed by the client computer, **characterized in that**:
the encryption and decryption program comprises a first step of temporarily catching a read request or a store request when the request to read or store a shared encrypted file in the file server is given from any application in the client computer, receiving client authentication of the client computer from the key management server and acquiring a key list having pairs of UNC path names and encryption keys corresponding to shared encrypted folders of the file server allowed to be accessed by the client computer from the key management server, and a second step of accessing a shared encrypted folder as a destination of the read or store request in the shared encrypted folders of the file server and performing decryption or encryption of the shared encrypted file by using an encryption key of the key list corresponding to a UNC path name concerned with the UNC path name to be accessed when the UNC path name concerned is present in the key list.
